# FASCICULE DE BREVET EUROPEEN

(11) **EP 2 303 637 B1**
(45) Date de publication et mention de la délivrance du brevet: **13.04.2016**
(21) Numéro de dépôt: 09769471.5
(22) Date de dépôt: 22.05.2009
(51) Int. Cl.: B60Q 3/00, B60Q 3/02

(54) **ELÉMENT D'HABILLAGE INTÉRIEUR LUMINEUX, PORTE ET VÉHICULE AUTOMOBILE CORRESPONDANTS**
LEUCHTENDER INNENVERKLEIDUNGSTEIL, TÜR UND KRAFTFAHRZEUG
LUMINOUS INTERIOR TRIM ELEMENT, AND CORRESPONDING DOOR AND MOTOR VEHICLE

(30) Priorité: 29.05.2008 FR 0853549
(43) Date de publication de la demande: 06.04.2011
(73) Titulaire: Faurecia Intérieur Industrie, 92000 Nanterre (FR); Hella KGaA Hueck & Co., 59552 Lippstadt (DE)
(72) Inventeur: ORY, Daniel, F-60110 Meru (FR); VASILESCU, Claudiu, F-60114 Meru (FR); DESRUS, Dany, F-92000 Nanterre (FR); GRIEBEL, Jürgen, 79689 Maulburg (DE); GOUEDARD, Yannick, 16451 Argyroupoli - Athènes (GR)
(74) Mandataire: Domenego, Bertrand
(86) Numéro de dépôt international: PCT/FR2009/050951
(87) Numéro de publication internationale: WO 2009/156630

(56) Documents cités:
- EP-A- 0 650 010
- EP-A- 0 813 026
- DE-A1- 10 129 953
- DE-A1-102006 017 960
- FR-A- 2 877 896
- US-B1- 6 454 452

## Description

La présente invention concerne un élément d'habillage intérieur lumineux, notamment pour véhicule automobile, tel que défini dans le préambule de la revendication 1.

Un tel élément d'habillage intérieur lumineux est connu du document FR 2 877 896 A1. Les documents DE 10129953 A1 et WO 2007/003663 A1 donnent d'autres exemples d'éléments d'habillage intérieur lumineux.

L'élément d'habillage intérieur lumineux connu du document FR 2 877 896 A1 permet l'éclairage de l'habitacle d'un véhicule automobile. L'éclairage est assuré par une source lumineuse disposée à l'intérieur d'un boîtier. Le boîtier comprend une paroi arrière et une paroi orientée vers l'habitacle. La source lumineuse est agencée pour que les rayons lumineux soient émis à l'intérieur du boîtier et subissent au moins une réflexion sur la paroi arrière pour ensuite traverser la paroi avant. A cet effet, la source lumineuse est disposée dans le boîtier de sorte que le flux de lumière soit sensiblement tangent à la paroi arrière et cette paroi arrière est agencée pour permettre la réflexion du flux de lumière vers la paroi avant.

Néanmoins, avec un tel agencement, l'illumination de l'habitacle du véhicule n'est pas toujours homogène et/ou suffisante. En effet, dans certain cas, la paroi avant n'est pas rétro-éclairée sur toute la longueur du boîtier de façon homogène. Le flux de lumière étant sensiblement tangent à la paroi arrière, seuls peu de rayons lumineux interceptent la paroi arrière et sont réfléchis par celle-ci.

Un but de l'invention est donc de fournir un élément d'habillage intérieur lumineux assurant une meilleure illumination de l'habitacle d'un véhicule automobile. En particulier, il s'agit d'obtenir un rétro-éclairage visuellement homogène et uniforme ou à évolution bien maîtrisée.

Ce but est atteint par un élément d'habillage du type précité et caractérisé par la partie caractérisante de la revendication 1.

En agençant l'élément lumineux de sorte que les rayons lumineux soient essentiellement envoyés vers la seconde paroi, en prévoyant que le face de la seconde paroi réfléchisse la lumière de manière diffuse, et en rendant la face interne de la première paroi en partie réfléchissante, la lumière subit des réflexions multiples entre les deux parois et se répand dans tout l'espace, même dans les zones éloignées de l'élément lumineux, avant de quitter celui-ci à travers la première paroi. Ainsi, toute la longueur de la première paroi est rétro-éclairée de manière homogène.

Suivant des modes particuliers de réalisation, l'élément d'habillage comprend une ou plusieurs des caractéristiques des revendications 2 à 14, prise(s) isolément ou suivant toutes les combinaisons techniquement possibles.

L'invention a également pour objet une porte de véhicule automobile comprenant un élément d'habillage tel que décrit ci-dessus, ainsi qu'un véhicule automobile comprenant un élément d'habillage tel que décrit ci-dessus.

L'invention sera mieux comprise à la lecture de la description qui va suivre, donnée uniquement à titre d'exemple, et faite en se référant aux dessins annexés.
La figure 1 est une vue en coupe transversale d'un élément d'habillage selon un mode de réalisation de l'invention ;
la figure 2 est une vue de face de l'élément d'habillage de la figure 1, la première paroi destinée à être visible depuis l'habitacle ayant été omise ; et
la figure 3 montre en détail plusieurs modes de réalisations des éléments géométriques saillants pouvant recouvrir les faces de l'élément d'habillage de la figure 1 et 2.

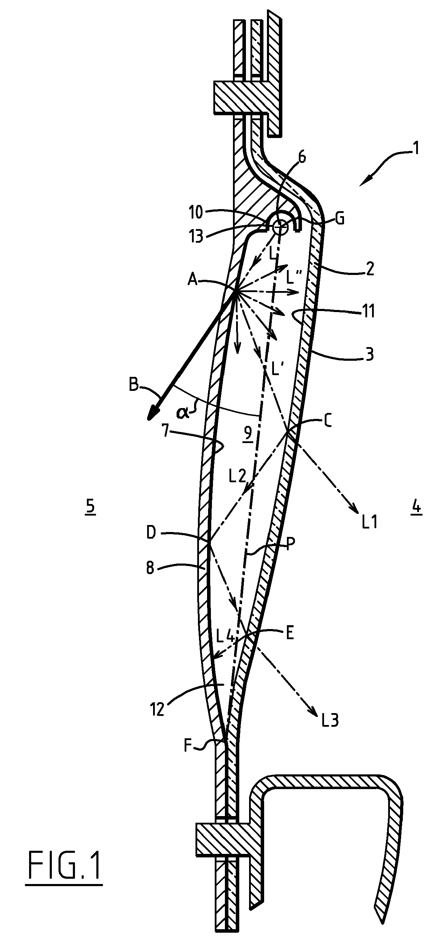

La figure 1 illustre un panneau de porte de véhicule automobile qui est munie d'un élément d'habillage 1, et qui sépare l'habitacle 4 de l'extérieur 5 du véhicule automobile. La fonction principale de l'élément d'habillage 1 est de fournir un éclairage d'ambiance à l'habitacle 4, cet éclairage devant être uniforme ou à évolution contrôlée (par exemple en présentant une décroissance douce le long d'une certaine direction de l'élément d'habillage).

L'élément d'habillage intérieur 1 selon la figure 1 dispose de deux parois latérales 2, 8, qui définissent entre elles un espace clos 9. Un guide de lumière 6, de forme cylindrique dans l'exemple décrit, est agencé à l'intérieur de l'espace clos 9. Plus précisément, le guide de lumière cylindrique 6, selon la figure 1, se trouve dans un recoin 13 à l'extrémité supérieure de l'espace clos 9.

Le guide de lumière 6 est constitué d'un matériau transparent ou translucide. Il s'étend sur tout ou partie de la périphérie 10 de l'espace clos 9.

Le guide de lumière cylindrique 6, qui peut en particulier prendre la forme d'une fibre optique, est relié à une source lumineuse, telle qu'une diode électroluminescente (Light Emitting Diode, LED).

La source lumineuse peut aussi être de nature différente. Il peut ainsi s'agir d'une lampe, telle qu'une lampe à incandescence.

En variante, la lumière peut aussi être générée par une pluralité de sources lumineuses, par exemple de une à trois. On peut aussi prévoir une pluralité de guides de lumière.

De façon alternative, au lieu d'un guide de lumière 6, on peut aussi prévoir une bande de film électroluminescent.

La paroi 2 est réalisée de telle façon qu'elle laisse passer de la lumière. A cet effet, la paroi 2 peut être translucide, transparente ou poreuse. C'est la paroi 2 qui est visible depuis l'habitacle 4 lorsque l'élément d'habillage 1 est incorporé par exemple dans la porte d'un véhicule automobile.

En variante, la paroi 2 de l'élément d'habillage 1 peut comprendre un revêtement externe. Ce revêtement dispose de pores qui laissent passer la lumière. Le revêtement peut aussi prendre d'autres formes, le revêtement restant cependant perméable à la lumière.

La paroi 2 dispose d'une face interne 11, c'est-à-dire disposée vers l'intérieur de l'élément d'habillage 1 par opposition à son extérieur. La face interne 11 est en partie réfléchissante et en partie perméable, c'est-à-dire qu'elle laisse passer une partie de la lumière incidente, tandis qu'une autre partie est réfléchie vers la paroi 8.

De préférence, la face interne 11 possède des propriétés de réflexion de la lumière telles que, selon le modèle de représentation des couleurs CIE 1976 (L*, a*, b*) (CIELAB), sa luminance L* est strictement supérieure à 60, et de préférence supérieure à 70.

Ainsi, la paroi 2 n'est pas totalement perméable à la lumière, mais la réfléchit en partie, ce qui permet d'assurer qu'une partie de la lumière, avant de quitter l'espace clos 9, atteint, par multiples réflexions, les zones de l'espace clos 9 qui sont éloignées du guide de lumière 6.

Dans une variante qui ne fait pas partie de l'invention, la face interne 11 peut posséder des propriétés de diffusion de la lumière, c'est-à-dire qu'une lumière incidente est réfléchie dans une multitude de directions et non seulement une, comme dans la présente invention. En particulier, cette réflexion diffuse peut être de type quasi-lambertien. Une telle réflexion diffuse homogénéise davantage la répartition de la lumière à l'intérieur de l'espace 9.

L'autre paroi 8, quant à elle, est opaque. Sa face interne 7 délimite l'espace clos 9 et est apte à réfléchir des rayons lumineux de façon diffuse. A cet effet, la face interne 7 peut être couverte d'un matériau présentant de telles propriétés optiques. Ce matériau peut être peint ou déposé sur la face 7 par un autre procédé. Ainsi, la face 7 réfléchit la lumière de façon diffuse, toujours dans un souci d'homogénéisation de l'illumination. De préférence, la face 7 est un réflecteur diffuseur quasi-lambertien.

De façon similaire à la face 11, la face 7 peut posséder des propriétés de réflexion de la lumière telles que, selon le modèle de représentation des couleurs CIE 1976 (L*, a*, b*) (CIELAB), sa luminance L* est strictement supérieure à 60, et de préférence supérieure à 70.

La lumière produite par la source est guidée par le guide de lumière cylindrique 6 qu'elle quitte latéralement, grâce à des reliefs prévus afin de créer des perturbations optiques sur la surface interne du guide de lumière 6. En rencontrant ces reliefs, la lumière s'échappe latéralement du guide de lumière 6, comme matérialisé sur la figure par le rayon L.

Le guide de lumière 6 émet de la lumière à l'intérieur de l'espace 9 de façon privilégiée selon une direction principale B. Cette direction B fait un angle α avec le plan P contenant le barycentre G du guide de lumière 6 et le segment de jonction F entre la face 7 de la seconde paroi 8 et la face interne 11 de la première paroi 2.

En référence à la figure 1, le segment de jonction F correspond au lieu de contact entre les faces 7 et 11 au niveau de l'extrémité inférieure de l'espace 9. Le segment F délimite la partie inférieure de l'espace 9. Sur la figure 1, le segment F se réduit à un point, puisque la figure 1 représente une coupe transversale de l'élément d'habillage.

L'angle α peut être compris entre 1 et 90°, mais de préférence il est compris entre 1 et 30°.

Un rayon lumineux L issu de la source lumineuse et interceptant la face interne 7 en un point A subit de multiples réflexions. Suite à l'interception du rayon L au point A, une multitude de rayons lumineux L", dont le rayon L', sont réémis dans toutes les directions opposées à la face 7 vers l'espace clos 9, par exemple suivant totalement ou partiellement une loi de lambert.

Le rayon L'intercepte la face 11 au point C. Le rayon L', en rencontrant la face interne 11 de la paroi 2 au point C, est scindé en deux composantes, à savoir les rayons L1 et L2. Le rayon L1 traverse la paroi 2, en étant réfracté, pour éclairer ensuite l'intérieur de l'habitacle 4. Le rayon L2 correspond à la composante réfléchie qui rencontre alors la face 7 au point D pour avoir un comportement similaire à celui du rayon L au point A. Au point d'impact E sur la face 11, le rayon L2 se sépare en deux rayons L3 et L4, de la même façon qu'auparavant le rayon L. Les autres rayons L" interceptent aussi la face 11 et ont un comportement similaire à celui du rayon L' précédemment décrit.

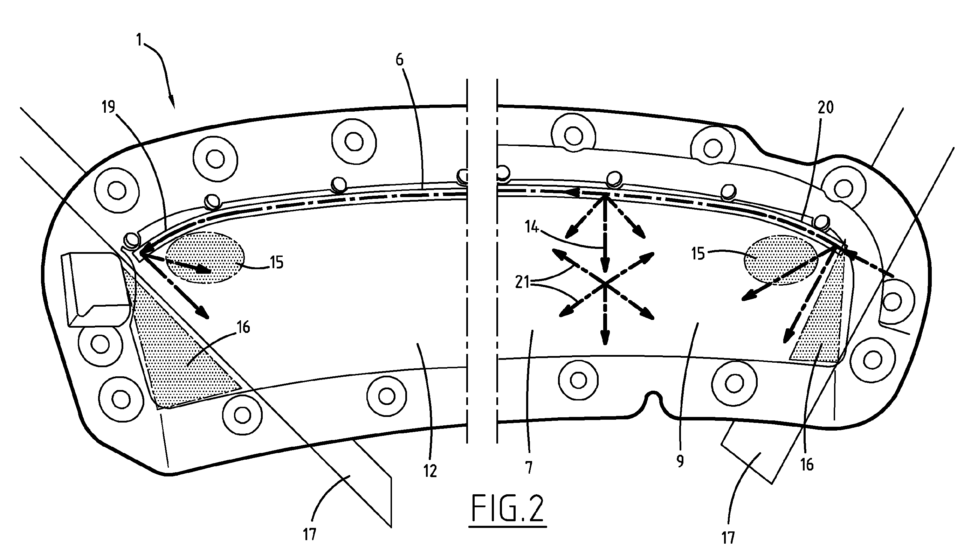

La figure 2 montre l'élément d'habillage 1 de face, tel qu'il peut être vu par un passager situé à l'intérieur de l'habitacle 4, au détail près que la première paroi 2 a été retirée afin de pouvoir apercevoir l'intérieur de l'espace clos 9.

Le guide de lumière 6 s'étend tout au long de la périphérie supérieure de l'espace clos 9 et présente une certaine courbure. Cette courbure est particulièrement prononcée au niveau des extrémités 19 et 20 du guide de lumière 6. La lumière est injectée au niveau de l'extrémité 20 et quitte le guide de lumière 6 vers le bord inférieur 12 de l'élément d'habillage 1, comme le montrent les flèches de la figure 2. En particulier, la flèche 14 représente un faisceau de rayons lumineux qui se dirige vers la face 7 pour ensuite être diffusé par celle-ci, c'est-à-dire renvoyé dans une pluralité de directions indiquées par les flèches 21.

En raison de la courbure prononcée, au niveau des extrémités 19 et 20, la lumière quitte le guide de lumière 6 selon un plan 17. Il en résulte que la lumière n'atteint pas suffisamment les zones 16 de l'espace clos 9 et en même temps est concentrée sur des zones 15 de cet espace 9. Si elle n'est pas modifiée, cette distribution hétérogène de la lumière crée des tâches sombres et des tâches brillantes sur la surface visible de l'élément d'habillage. De telles tâches rendent le rétro-éclairage généré par l'élément d'habillage 1 désagréable. Elles sont évitées en ajoutant des aspérités au niveau des zones 15 et 16 concernées de la face 7.

Ces aspérités sont de préférences formées par un ensemble d'éléments géométriques saillants. On obtient ainsi un relief qui est réalisé de telle façon qu'il redistribue la lumière des zones trop illuminées 15 vers les zones peu illuminées 16. Ainsi, le rétro-éclairage fourni par l'élément d'habillage 1 est homogénéisé et la formation de tâches désagréables est empêchée.

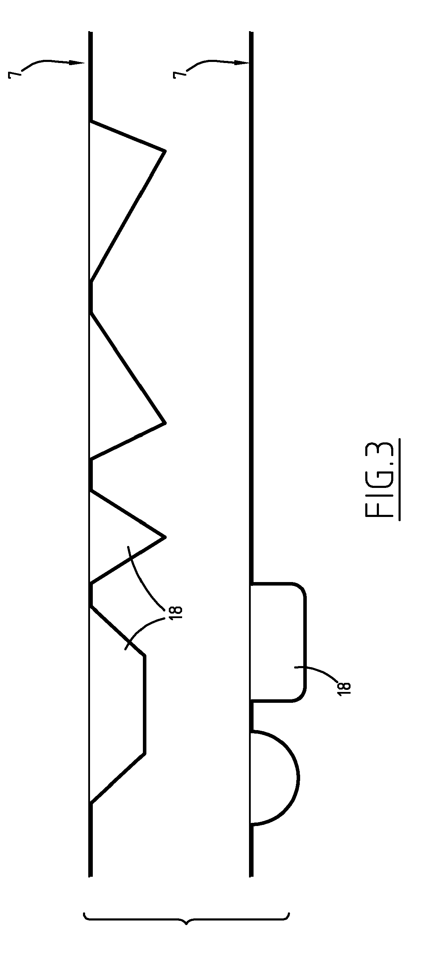

La figure 3 donne plusieurs exemples d'éléments géométriques saillants 18 qui peuvent recouvrir les zones 15 et 16. Les éléments 18 peuvent avoir des formes variées. Tel que montré à la figure 3, leur section peut par exemple avoir la forme d'un trapèze, d'un triangle, d'un demi-cercle ou d'un rectangle arrondi.

Avec l'élément d'habillage qui vient d'être décrit, l'illumination de l'habitacle 4 est homogénéisée et améliorée, et ce avec un nombre réduit de sources lumineuses. En effet, grâce aux réflexions partielles multiples au niveau de la paroi 2, et grâce aux propriétés diffusantes de la face 7, la lumière se répartit dans tout le volume de l'espace 9 et quitte celui-ci sur toute la longueur de la paroi 2. Ainsi, vu de l'habitacle 4, la paroi 2 émet un rayonnement uniforme sur l'ensemble de sa surface apparente.

Dans certaines variantes, on peut ne pas employer d'aspérités sur la face 7 de l'élément d'habillage 1.

## Revendications

1. Elément d'habillage intérieur lumineux (1), notamment pour véhicule automobile, comportant :
- une première paroi (2) laissant passer de la lumière, cette première paroi (2) présentant une face externe (3) destinée à être visible depuis l'habitacle (4) du véhicule automobile,
- une seconde paroi (8) délimitant un espace (9) avec la première paroi (2) et dont une face (7) en regard de la première paroi (2) est apte à réfléchir des rayons lumineux de façon diffuse, et
- un dispositif d'éclairage comprenant un élément lumineux (6) positionné à l'intérieur de l'espace (9) de manière à rétro-éclairer la première paroi (2) et à envoyer un faisceau de rayons lumineux (L) principalement vers la seconde paroi (8),
**caractérise en ce que** la face interne (11) de la première paroi (2), opposée à la face externe (3), possède des propriétés de réflexion de lumière telles qu'un rayon lumineux (L') incident sur cette face interne (11) est scindé en deux rayons (L1, L2), dont l'un (L1) traverse la première paroi (2) en étant réfracté pour éclairer ensuite l'intérieur de l'habitacle (4), et dont l'autre (L2) est réfléchi dans une seule direction pour rencontrer la face (7) de la seconde paroi (8).

2. Elément d'habillage selon la revendication 1, dans lequel l'élément lumineux (6) est apte à envoyer le faisceau de rayons lumineux (L) principalement selon une direction (B) qui forme un angle (α) compris entre 1 et 90° avec le plan (P) contenant le barycentre (G) de l'élément lumineux (6) et le segment de jonction (F) entre la face (7) de la seconde paroi (8) et la face interne (11) de la première paroi (2).

3. Elément d'habillage selon la revendication 2, dans lequel l'angle (α) est compris entre 1 et 30°.

4. Elément d'habillage selon l'une quelconque des revendications précédentes, dans lequel la face (7) de la seconde paroi (8) est un réflecteur diffuseur quasi-lambertien.

5. Elément d'habillage selon l'une quelconque des revendications précédentes, dans lequel les propriétés de réflexion de lumière de la face interne (7) sont telles que, selon le modèle de représentation des couleurs CIE 1976 (L*, a*, b*) (CIELAB), sa luminance L* est strictement supérieure à 60.

6. Elément d'habillage selon l'une quelconque des revendications précédentes, dans lequel la face (7) de la seconde paroi (8) comprend un revêtement réfléchissant.

7. Elément d'habillage selon l'une quelconque des revendications précédentes, dans lequel la face (7) de la seconde paroi (8) est au moins en partie pourvues d'aspérités (18) formant un motif apte à disperser par réflexion des rayons lumineux incidents sur ce motif.

8. Elément d'habillage selon la revendication 7, dans lequel les aspérités sont formées par un ensemble d'éléments géométriques saillants (18) distribués sur au moins une partie de la face (7) et/ou de la face (11).

9. Elément d'habillage selon la revendication 8, dans lequel la surface de chacun d'une pluralité d'éléments géométriques saillants (18) est pourvue d'éléments saillants.

10. Elément d'habillage selon l'une quelconque des revendications précédentes, dans lequel l'élément lumineux (6) s'étend sur au moins une partie de la périphérie (10) de l'espace (9).

11. Elément d'habillage selon l'une quelconque des revendications précédentes, dans lequel l'élément lumineux (6) est un guide de lumière cylindrique, tel qu'une fibre optique.

12. Elément d'habillage selon l'une quelconque des revendications précédentes, dans lequel le dispositif d'éclairage comprend une source lumineuse, telle qu'une diode électroluminescente (LED), reliée à l'élément lumineux (6).

13. Elément d'habillage selon l'une quelconque des revendications précédentes, dans lequel l'élément lumineux (6) comprend des reliefs créant des perturbations optiques.

14. Elément d'habillage selon l'une quelconque des revendications précédentes, dans lequel la face externe (3) de la première paroi (2) comprend un revêtement poreux, notamment d'un tissu poreux, les pores de ce revêtement permettant le passage de rayons lumineux (L1, L3).

15. Porte de véhicule automobile comprenant un élément d'habillage selon l'une quelconque des revendications précédentes.

16. Véhicule automobile comprenant un élément d'habillage selon l'une quelconque des revendications 1 à 14.

## Patentansprüche

1. Leuchtendes Innenverkleidungselement (1), insbesondere für ein Kraftfahrzeug, aufweisend:
- eine erste lichtdurchlässige Wand (2), wobei diese erste Wand (2) eine Außenfläche (3) aufweist, die bestimmt ist, vom Fahrgastraum (4) des Kraftfahrzeugs gesehen zu werden,
- eine zweite Wand (8), die mit der ersten Wand (2) einen Raum (9) begrenzt und von der eine Fläche (7) gegenüber der ersten Wand (2) imstande ist, Lichtstrahlen diffus zu reflektieren, und
- eine Beleuchtungsvorrichtung, die ein Leuchtelement (6) umfasst, das im Raum (9) derart positioniert ist, dass es die erste Wand (2) hintergrundbeleuchtet und ein Lichtstrahlenbündel (L) im Wesentlichen zur zweiten Wand (8) schickt,
**dadurch gekennzeichnet, dass** die innere Fläche (11) der ersten Wand (2), die der Außenfläche (3) gegenüberliegt, Lichtreflexionseigenschaften aufweist, so dass ein auf diese innere Fläche (11) auftreffender Lichtstrahl (L') in zwei Strahlen (L1, L2) geteilt wird, von denen einer (L1) die erste Wand (2) durchquert und dabei gebrochen wird, um danach das Innere des Fahrgastraums (4) zu beleuchten, und von denen der andere (L2) in eine einzige Richtung reflektiert wird, um auf die Fläche (7) der zweite Wand (8) aufzutreffen.

2. Verkleidungselement nach Anspruch 1, wobei das Leuchtelement (6) imstande ist, das Lichtstrahlenbündel (L) im Wesentlichen in eine Richtung (B) zu senden, die einen Winkel (α) zwischen 1 und 90° inklusive mit der Ebene (P) bildet, welche das Baryzentrum (G) des Leuchtelements (6) und das Verbindungselement (F) zwischen der Fläche (7) der zweiten Wand (8) der inneren Fläche (11) der ersten Wand (2) enthält.

3. Verkleidungselement nach Anspruch 2, wobei der Winkel (α) zwischen 1 und 30° inklusive beträgt.

4. Verkleidungselement nach einem der vorangehenden Ansprüche, wobei die Fläche (7) der zweiten Wand (8) ein quasi lambertscher Reflektor Diffusor ist.

5. Verkleidungselement nach einem der vorangehenden Ansprüche, wobei die Lichtreflexionseigenschaften der Inneren Fläche (7) derart sind, dass seine Luminanz L* gemäß dem Farbdarstellungsmodell CIE 1976 (L*, a*, b*) (CIELAB) größer als 60 ist.

6. Verkleidungselement nach einem der vorangehenden Ansprüche, wobei die Fläche (7) der zweiten Wand (8) eine reflektierende Beschichtung umfasst.

7. Verkleidungselement nach einem der vorangehenden Ansprüche, wobei die Fläche (7) der zweiten Wand (8) mindestens teilweise mit Unebenheiten (18) ausgestattet ist, die ein Motiv bilden, das imstande ist, auf dieses Motiv einfallende Lichtstrahlen durch Reflexion zu streuen.

8. Verkleidungselement nach Anspruch 7, wobei die Unebenheiten von einer Gruppe von hervorstehender geometrischer Elemente (18) gebildet sind, die auf mindestens einem Teil der Fläche (7) und/oder der Fläche (11) verteilt sind.

9. Verkleidungselement nach Anspruch 8, wobei die Oberfläche jedes einer Vielzahl hervorstehender geometrischer Elemente (18) mit hervorstehenden Elementen ausgestattet ist.

10. Verkleidungselement nach einem der vorangehenden Ansprüche, wobei sich das Leuchtelement (6) über mindestens einen Teil des Umfangs (10) des Raums (9) erstreckt.

11. Verkleidungselement nach einem der vorangehenden Ansprüche, wobei das Leuchtelement (6) eine zylindrische Lichtführung wie eine Glasfaser ist.

12. Verkleidungselement nach einem der vorangehenden Ansprüche, wobei die Beleuchtungsvorrichtung eine Lichtquelle, wie eine elektrolumineszierende Diode (LED), umfasst, die mit dem Leuchtelement (6) verbunden ist.

13. Verkleidungselement nach einem der vorangehenden Ansprüche, wobei das Leuchtelement (6) Reliefs umfasst, die optische Störungen erzeugen.

14. Verkleidungselement nach einem der vorangehenden Ansprüche, wobei die Außenfläche (3) der ersten Wand (2) eine poröse Verkleidung umfasst, insbesondere ein poröses Gewebe, wobei die Poren dieser Verkleidung den Durchgang von Lichtstrahlen (L1, L3) gestatten.

15. Kraftfahrzeugtür, umfassend ein Verkleidungselement nach einem der vorangehenden Ansprüche.

16. Kraftfahrzeug, umfassend ein Verkleidungselement nach einem der Ansprüche 1 bis 14.

## Claims

1. A luminous interior trim element (1), namely for motor vehicles, comprising:
- a first wall (2) letting light pass, this first wall (2) having an outer surface (3) intended to be visible from the passenger compartment (4) of the motor vehicle,
- a second wall (8) delimiting a space (9) with the first wall (2), one surface (7) of the second wall (8) opposite the first wall (2) being capable of reflecting light rays in a diffuse manner, and
- a lighting device comprising a luminous element (6) positioned inside the space (9) so as to backlight the first wall (2), and capable of sending a beam of light rays (L) mainly to the second wall (8),
**characterized in that** the inner surface (11) of the first wall (2), opposite the outer surface (3), has light-reflecting properties such that a light ray (L') incident on this inner surface (11) is divided into two rays (L1, L2, one of which (L1) passes through the first wall (2) while being refracted to then light the passenger compartment (4) and the other of which is (L2) reflected in a single direction.

2. The trim element according to claim 1, wherein the luminous element (6) is adapted to send the beam of light rays (L) mainly in one direction (B) forming an angle (α) between 1 and 90° with the plane (P) containing the barycenter (G) of the luminous element (6) and the joining segment (F) between the surface (7) of the second wall (8) and the inner surface (11) of the first wall (2).

3. The trim element according to claim 2, wherein the angle (α) is between 1 and 30°.

4. The trim element according to any of the preceding claims, wherein the surface (7) of the second wall (8) is a near-Lambertian diffusing reflector.

5. The trim element according to any of the preceding claims, wherein the light-reflecting properties of the inner surface (7) are such that according to the CIE 1976 (L*, a*, b*) (CIELAB) color space, luminance L* thereof is strictly speaking greater than 60.

6. The trim element according to any of the preceding claims, wherein the surface (7) of the second wall (8) comprises a reflective coating.

7. The trim element according to any of the preceding claims, wherein the surface (7) of the second wall (8) is at least partially provided with asperities (18) forming a pattern adapted to disperse by reflection light rays incident on this pattern.

8. The trim element according to claim 7, wherein the asperities are formed by a set of protruding geometric elements (18) distributed over at least one part of the surface (7) and/or the surface (11).

9. The trim element according to claim 8, wherein the surface of each of a plurality of protruding geometric elements (18) is provided with protruding elements.

10. The trim element according to any of the preceding claims, wherein the luminous element (6) extends over at least one part of the periphery (10) of space (9).

11. The trim element according to any of the preceding claims, wherein the luminous element (6) is a cylindrical light guide, such as an optical fiber.

12. The trim element according to any of the preceding claims, wherein the lighting device comprises a light source, such as a light-emitting diode (LED) connected to the luminous element (6).

13. The trim element according to any of the preceding claims, wherein the luminous element (6) comprises reliefs creating optical interferences.

14. The trim element according to any of the preceding claims, wherein the outer surface (3) of the first wall (2) comprises a porous coating, namely a porous fabric, the pores of this coating letting light rays (L1, L3) pass.

15. A motor vehicle door comprising a trim element according to any of the preceding claims.

16. A motor vehicle comprising a trim element according to any of claims 1 to 14.
